# EUROPEAN PATENT SPECIFICATION

(11) **EP 1 923 974 B1**
(45) Date of publication and mention of the grant of the patent: **15.04.2009**
(21) Application number: 07380286.0
(22) Date of filing: 23.10.2007
(51) Int. Cl.: H02G 3/18

(54) **Floor box for accessing electrical conductor cables to a multiple connection tower**
Bodenkassette für den Zugang zu den elektrischen Leiterkabeln zu einem Mehrfachanschlussschacht
Boîte de sol pour accès aux câbles conducteurs électriques d'une tour à connexion multiple

(30) Priority: 15.11.2006 ES 200602455 U
(43) Date of publication of application: 21.05.2008
(73) Proprietor: Unex Aparellaje Electrico S.L., 08903 L'Hospitalet de Llobregat (Barcelona) (ES)
(72) Inventor: Salcedo Suñol, Eloi, 08620 Sant Vicenç dels Horts (Barcelona) (ES)
(74) Representative: Curell Aguilà, Marcelino

(56) References cited:
- US-A- 3 651 245
- US-A- 5 466 886
- US-A- 5 783 774
- US-A1- 2006 231 279
- US-B1- 6 395 978

## Description

### Field of the invention

This invention relates to a floor box for accessing electrical conductor cables to a multiple connection tower, in particular a box embedded in a concrete floor, which selectively provides output to electrical power conductor cables and electrical or optical signal transmission conductor cables used in computing for intercommunicating data and in telephony for transmitting voice and/or data (fax), so that, with all of them running through the inside of tubular conduits embedded in the concrete floor, it is possible to insert their free ends into the respective predetermined connection bases of a multiple connection tower lying at floor level.

### State of the art

It is well known to arrange output boxes for the ends of electrical cables to respectively transmit signals, data and electrical power, with said boxes being provided with means for installing in the inside thereof electrical connection mechanisms comprising terminals or other electrical connection devices.

Most of these boxes are embedded in points on walls thus forming plug sockets for the connection pins of most electrical apparatuses, without thereby excluding the possibility that they may also be provided, embedded as well, in points on the floor or on the surface of floors or walls.

If the boxes are embedded in points on the floor of a work area or a pavement supporting service traffic, they are installed before pouring the concrete that forms the concrete floor for a floor or the bed of a traffic pavement, and once have been laid as far as said boxes the tubular conduits through which the electrical conductor cables for transmitting data and/or electrical power will run.

This consequently means that as many models of said embeddable boxes must be provided as there are concrete floor thicknesses, which at all events is economically impossible.

In order to overcome this drawback the solution was adopted whereby one single model of said boxes was made, and it was made from an electrically insulated material that could easily adapt to the concrete floor thickness, once the box was embedded in said concrete floor, by cutting off the part of the box that extended beyond the surface of the concrete floor.

Patents US 5.466.886, 5.783.774 and 6.395.978 are known, which have been developed in accordance with the preceding procedure, although the first two patents do not envisage the material separation between the electrical conductor cables for transmitting signals, data and information and the electrical power conductor cables, whereas this arrangement is foreseen in the third patent.

All of said patents have output boxes for electrical cables that are specially designed to be embedded in a concrete floor, with these output boxes being made up of tubular bodies having a substantially cylindrical shape with at least the bottom base being closed.

Said tubular bodies have, on their wall and near their closed base, a series of tunnel-like projections, placed in a radial and/or lateral arrangement, which form inlet conduits that lead inside the tubular body of said electrical cables, which cables access said tubular body contained within tubular conduits that are connected to said projections, with the tubular conduits also being embedded in said concrete floor. It is also foreseen that, next to the said projections, the tubular bodies are provided with lugs for inserting setting screws and installing said tubular bodies on a surface without the need for embedding.

None of said patents envisages providing said tubular bodies with means that guide and facilitate cutting the part of said bodies that projects from the top surface of the concrete floor.

In all the preceding cases, the output boxes include in the inside thereof electrical connection mechanisms, whereby said mechanisms lie at floor level and, therefore, are exposed to non-desirable foreign bodies entering the connection bushings thereof.

The output boxes that are the object of the above-mentioned patents suffer from the drawback that if the tunnel-like projections are not used they must be blocked with plugs, like the ones foreseen in patent US 5.783.774, so that the concrete constituting the concrete floor does not enter said boxes as said concrete floor is being formed.

Moreover, none of the listed patents envisages that the tubular bodies of the output boxes are provided with cutting guiding means for removing the part that projects over the level of the concrete floor, and for facilitating the cutting operation.

Finally, in the case of patent US 6.395.978, which has mutual separation means for the electrical cables, said means are complex and necessarily comprise a seating base on the bottom of the tubular body.

### Disclosure of the invention

In the light of the above, it is concluded that an output box would be desirable of the floor-embedded type, which did not suffer from the drawbacks explained in the preceding paragraphs.

For this reason the solution has been adopted whereby the outer surface of the tubular body is provided with perimeter means for guiding and facilitating the cutting operation, like the ones on the plate separating the electrical cables, while the entrance for said electrical cables is made during installation, thanks to holes defined by pre-cutting lines, and the separating plate fits in sideways in the bottom of the tubular body.

According to the preceding solution the floor box for accessing electrical conductor cables to a multiple connection tower has been developed, which is the object of this invention, particularly consisting of a box that is suitable for being embedded in a concrete floor and for selectively providing output to electrical power cables and to electrical or optical signal transmission conductor cables that all run through the inside of tubular conduits that are embedded in said concrete floor and which make it possible to insert the free ends of said cables into respective predetermined connection bases of a multiple connection tower lying at floor level, characterized in that it is made up of a tubular body that, at a bottom end, has a seating base closed by a bottom wall and a first outer perimeter area adjacent to said bottom wall provided with means for anchoring to said concrete floor, there being provided on said bottom wall and in said first perimeter area connecting means for connecting with said tubular conduits, and a second perimeter area, extending along the rest of said tubular body and which is provided with cutting guiding means to facilitate and guide the cutting of an excess portion of said tubular body with respect to the thickness of said concrete floor, and at its other top end said tubular body has an open base in which there fits a supporting ring for supporting said tower in which, in turn, in the central gap thereof, there fits a guide ring, while in the inside thereof said tubular body is provided on its bottom wall with retaining means for retaining a separating plate that separates said electrical power conductor cables from said electrical or optical signal transmission conductor cables.

Preferably, said connecting means consist of separable areas of the actual tubular body that are delimited by weakening lines.

Preferably, said means for anchoring the tubular body to the concrete floor consist of short radial tabs emerging from said first perimeter area at points thereof that do not coincide with said separable areas provided in said first perimeter area.

Preferably, said cutting guiding means are made up of perimeter weakening lines that are parallel to one another and with respect to said seating base, with said perimeter weakening lines scoring the outer surface of said tubular body with the exception of the bottom wall of said seating base and said first outer perimeter area adjacent to said bottom wall.

Preferably, said supporting ring has, on its inner surface that attaches to said tubular body, diametrically opposite insertion flanges, which are applied to the inner surface of said open base of the tubular body.

Preferably, said guide ring that fits inside said supporting ring has on its outer perimeter and on points on its inner surface that attaches to said supporting ring, hooked pins; in its inner perimeter and at diametrically opposite points, it has notches; and in a middle perimeter between said outer and said inner perimeter, a frustoconical skirting that projects from the outer surface of said guide ring.

In an advantageous embodiment, the floor box according to the invention comprises a safety cover that is made up of a flat disc that is marginally flanked by an insertion skirting that fits into said open base of the tubular body.

Preferably, said separating plate consists of a rectangular plate that has: two lateral rectilinear and opposite sides, which are intended to be applied to inner generating lines of said tubular body; one bottom rectilinear side, which is intended to be applied to said bottom wall of the seating base of the tubular body; and one top side that has symmetrical stepping sized according to the projection of said insertion flanges of the supporting ring and said hooked pins on the guide ring.

Preferably, said retaining means for retaining the separating plate, which are arranged on the bottom wall of said tubular body, consist of two orthogonal ribs that cross over in the centre of said bottom wall and which are wide enough for the bottom side of said rectangular plate forming said separating plate to fit into them.

Preferably, said connecting means foreseen in the bottom wall of said tubular body are made up of separable areas located in the circular quadrants formed by said orthogonal ribs.

Preferably, said orthogonal ribs are made up of pairs of walls of reduced height that project from the inner surface of the bottom wall of said tubular body.
Preferably, the rectangular plate that forms said separating plate, like part of the outer surface of said tubular body, is scored with weakening lines parallel to the bottom side of said rectangular plate, and which extend between the two lateral sides of said plate.

Preferably, said short radial tabs have a straight trapezoidal shape with the smaller base thereof being applied to said tubular body and the larger and smaller sides thereof lying perpendicular to said tubular body, said smaller side being arranged at a lower position than the larger side.

Preferably, said supporting ring has on its top surface a plurality of blind holes juxtaposed according to an average circumference.

In an advantageous embodiment, the floor box according to the invention comprises a closing lid that is applied to said supporting ring, said closing lid being resistant to traffic and being provided with holes for being screwed to said supporting ring and a central projection that blocks the central gap in said supporting ring.

Preferably, said guide ring is retained in said supporting ring by an annular plate screwed to said supporting ring.

Finally, it is worth indicating that further characteristics of the invention will become apparent throughout the following description.

### Brief description of the drawings

In order to facilitate the understanding of the preceding ideas of the invention, a description is provided of some of the possible embodiments thereof, with reference to the accompanying illustrative drawings, in which:
Figure 1 is an exploded perspective view of a floor box made according to the invention.
Figure 2 is a perspective view of the floor box in the previous figure, once its component elements have been assembled to be connected to a hinged channelling provided with connection holes, as shown in Figure 11.
Figure 3 is a perspective view, similar to the one in the previous figure, wherein the floor box is provided with the protection cover for assembly in the concrete floor.
Figure 4 is an elevation view of the tubular body showing the lateral connection means of the tubular conduits carrying the electrical power cables and the voice, data and computer signal conductor cables.
Figure 5 is an inner plane view of the tubular body showing the inside of the bottom wall of the seating base of the tubular body, indicating the retention means for the separating plate.
Figure 6 is an outer plane view of the tubular body showing the axial connection means of the tubular conduits carrying the electrical power cables and the voice, data and computer signal conductor cables.
Figure 7 is an exploded perspective view of a floor box according to the invention and a support foot for a multiple electrical connection tower before they are assembled.
Figure 8 is a perspective view of the assembled unit of the elements included in the figure above, with the incorporation of the box which, being assembled on the support foot mentioned in the previous figure, encloses and supports the electrical components of the multiple connection tower.
Figure 9 is a partially sectioned view of a floor box arrangement, embedded in a concrete floor, showing the connection to said box of tubular conduits carrying electrical conductors and the arrangement on said box of a multiple connection tower.
Figure 10 is an exploded perspective view of a closing lid which, applied and retained by screws to the supporting ring, closes the tubular body and enables traffic to pass over it.
Figure 11 is an exploded perspective view of the means for connecting a hinged channelling for electrical conductors to the tubular body.

### Detailed description of some embodiments of the invention

The figures represent a floor box for accessing electrical conductor cables to a multiple connection tower made according to the invention, in particular a box embedded in a concrete floor which selectively provides output to electrical power conductor cables and electrical or optical signal transmission conductor cables used in computing for intercommunicating data and in telephony for transmitting voice and/or data (fax), so that, with all of them running through the inside of tubular conduits embedded in the concrete floor, it is possible to insert their free ends into the respective predetermined connection bases of a multiple connection tower lying at floor level.

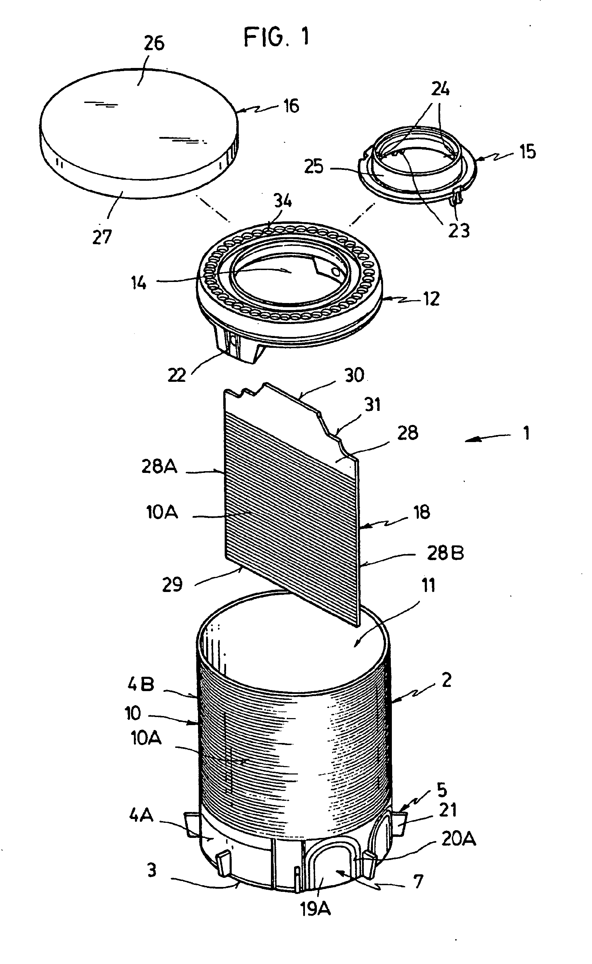

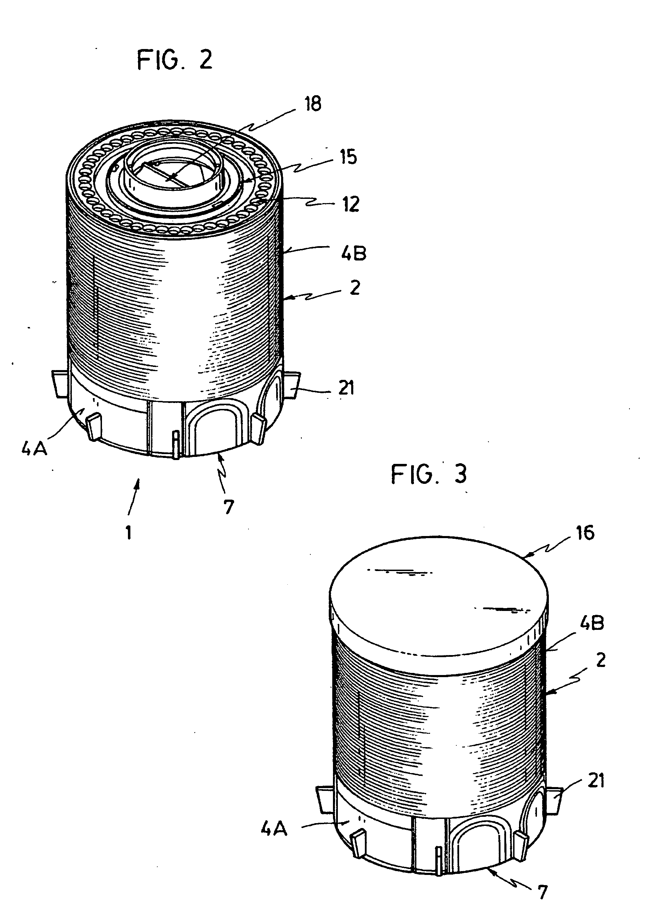

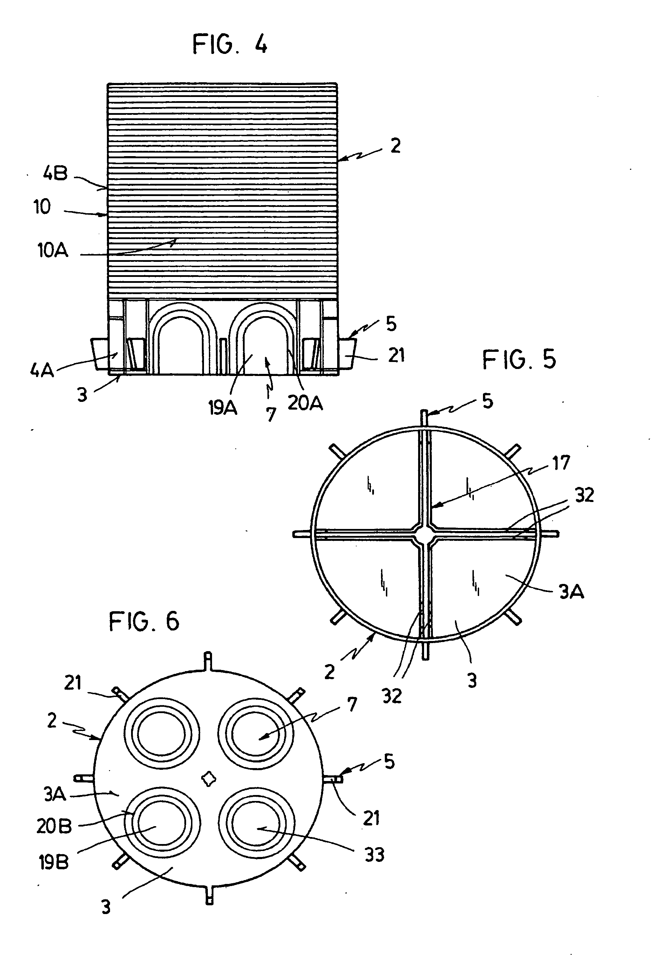

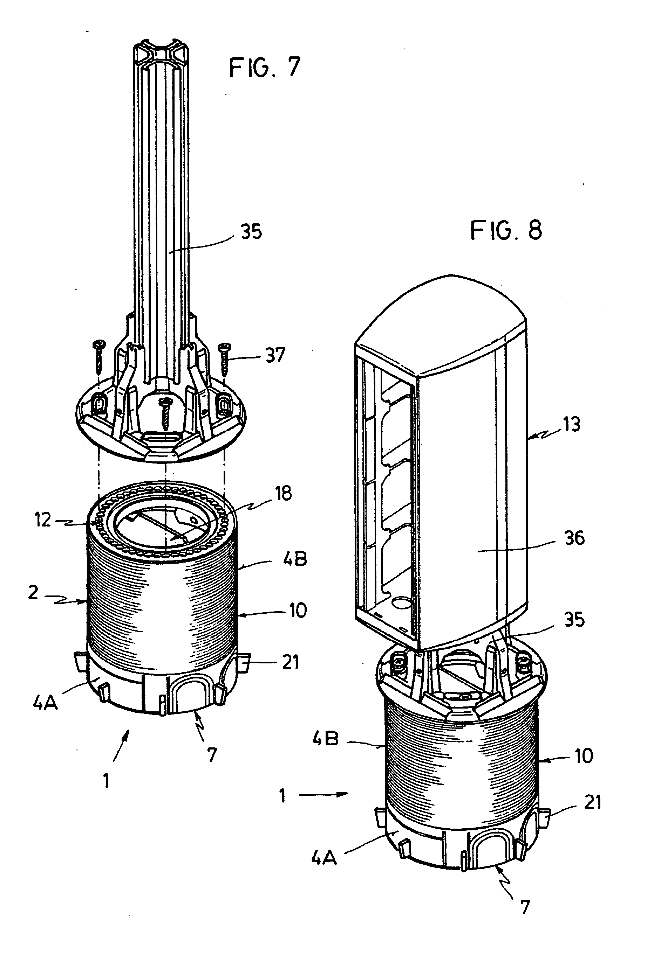

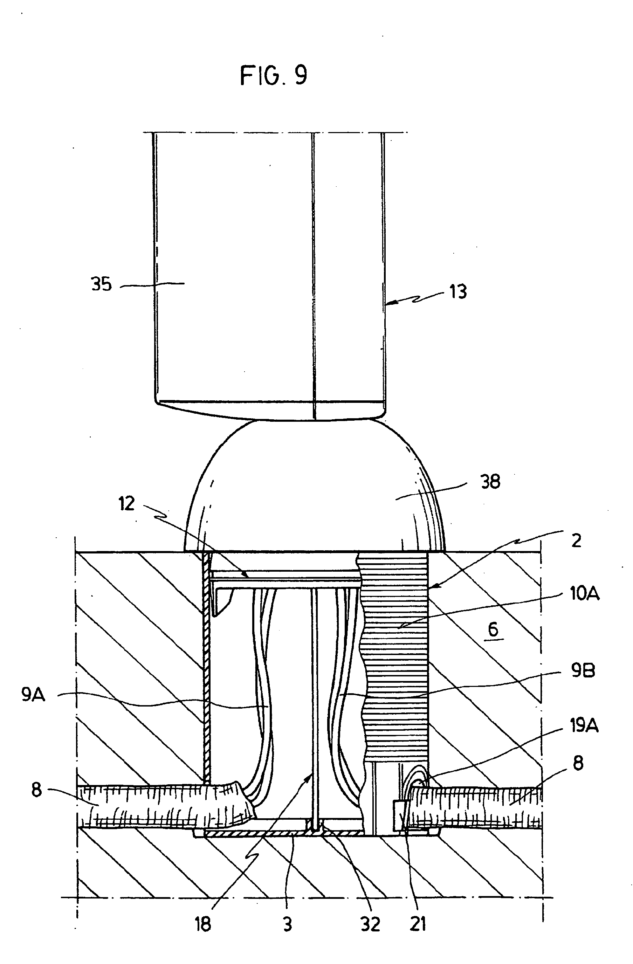

Figures 1 through 6 show a floor box according to the invention that is suitable for installing therein a multiple connection tower, said floor box 1 being made up of a tubular body 2 which, at a bottom end, has a seating base 3 closed by a bottom wall 3A and a first outer perimeter area 4A adjacent to said bottom wall 3A, provided with means 5 for anchoring to the concrete floor 6 (see Figure 9) and means 7 for connecting with the tubular conduits 8 (see Figure 9) carrying the electrical power cables 9A and/or computing or telephony signal cables 9B; and a second perimeter area 4B, which extends along the rest of tubular body 2, provided with means 10 for facilitating and guiding the cutting operation to adapt the length of said tubular body 2 to the thickness of concrete floor 6; while, at its other top end, tubular body 2 has an open base 11 in which there fits a supporting ring 12 for supporting the tower 13 (see Figures 8 and 9) in which, in turn, in the central gap 14 thereof, there fits a guide ring 15 for electrical power cables 9A and/or computing and/or telephone signal cables 9B that run inside a hinged tubular conduit that is connected to said guide ring 15; an ensemble that can be closed by a safety cover 16 that protects the inside of tubular body 2 during its installation; while in the inside thereof said tubular body 2 is provided on its bottom wall 3A with means 17 (see Figure 5) for retaining a separating plate 18 that separates electrical power cables 9A from computing and/or telephony cables 9B.

Connecting means 7 for tubular conduits 8 carrying electrical power conductor cables 9A and computing and/or telephony signal cables 9B which, as illustrated in Figures 4, 5, 6 and 9 are provided at the bottom end of tubular body 2 where seating base 3 is to be found, in particular in bottom wall 3A of said bottom base and in outer perimeter area 4A adjacent thereto, consist, respectively, of lateral separable areas 19A and axial separable areas 19B (see Figure 6) of the actual tubular body 2, which are defined, also respectively, by weakening lines 20A and 20B.

Means 5 for anchoring tubular body 2 to concrete floor 6 consist of short radial tabs 21 projecting from outer perimeter area 4A adjacent to bottom wall 3A of seating base 3 of said tubular body 2, at points in said area 4A that do no coincide with separable areas 19A in said outer perimeter area 4A.

Means 10 for facilitating and guiding the cutting of the excess portion of tubular body 2 are made up of weakening lines 10A that, being on the perimeter and parallel to one another and with seating base 3, score the outer surface of tubular body 2, with the exception of bottom wall 3A of seating base 3 and outer perimeter area 4A adjacent to said seating base 3.

Supporting ring 12 for supporting tower 13 has, on its inner surface that attaches to tubular body 2, two insertion flanges 22 that fit inside said tubular body 2 and are diametrically opposite and applied to the inner surface of open base 11 of said tubular body 2.

Guide ring 15 that fits inside supporting ring 12 has: on its outer perimeter and at points on its inner surface that attaches to said supporting ring 12, hooked pins 23; on its inner perimeter at diametrically opposite points, two notches 24; and, on a middle perimeter between the two preceding ones, a frustoconical skirting 25 that projects from the outer surface of said guide ring 15. Said guide ring 15 has been designed particularly for a hinged channelling for said electrical power conductor cables 9A and/or computer and/or telephone signal cables 9B to be anchored into it, like the one that is the object of Spanish Utility Model Application No. 200201479.

Safety cover 16 is comprised of a flat disc 26 that is marginally flanked by a skirting 27 that fits into open base 11 of tubular body 2. Said safety cover 16 is intended to protect the inside of tubular body 2 against foreign bodies accidentally entering inside said tubular body 2 while it is being installed.

Separating plate 18 is made up of a rectangular part 28 that has: two lateral sides 28A and 28B, which are rectilinear and opposite and are intended to be applied to inner generating lines of the tubular body; one bottom rectilinear side 29, which is intended to be applied to bottom wall 3A of seating base 3 of said tubular body 2, and one top side 30 with symmetrical stepping 31 sized according to the projection of insertion flanges 22 of supporting ring 12 and hooked pins 23 of guide ring 15.

Means 17 for retaining separating plate 18, as shown in Figure 5, are arranged on bottom wall 3A of tubular body 2 and consist of two pairs of orthogonal ribs 32 that cross in the centre of bottom wall 3A of said tubular body 2 and have a suitable width for pinch inserting the edge of bottom side 29 of separating plate 18.

Connecting means 7 arranged on bottom wall 3A of tubular body 2 are made up of separable circular areas 33 located in the centre of the circular quadrants formed by orthogonal ribs 32. Said orthogonal ribs 32 are made up of pairs of walls of reduced height that project from the inner surface of bottom wall 3A of tubular body 2.

Separating plate 18, like part of the outer surface of tubular body 2, is scored with weakening lines 10A that are parallel to bottom side 29 and run between the two lateral sides 28A and 28B.

Short radial tabs 21 have a straight trapezoidal shape with the smaller base thereof applied to tubular body 2 and the larger and smaller sides thereof lying perpendicular to said tubular body 2, the smaller side being arranged in a lower position than the larger side.

Supporting ring 12 has on its top surface a plurality of blind holes 34 juxtaposed according to an average circumference of said supporting ring 12.

Figures 7 and 8 show, respectively, the arrangement of one support foot 35 of box 36 of tower 13, which is attached to tubular body 2 of floor box 1 by screws 37, and the ensemble mounted in exhibition mode outside the concrete floor, its definitive arrangement being shown in Figure 9 wherein a cap 38 can be seen that covers the space between the concrete floor and the box of multiple connection tower 13.

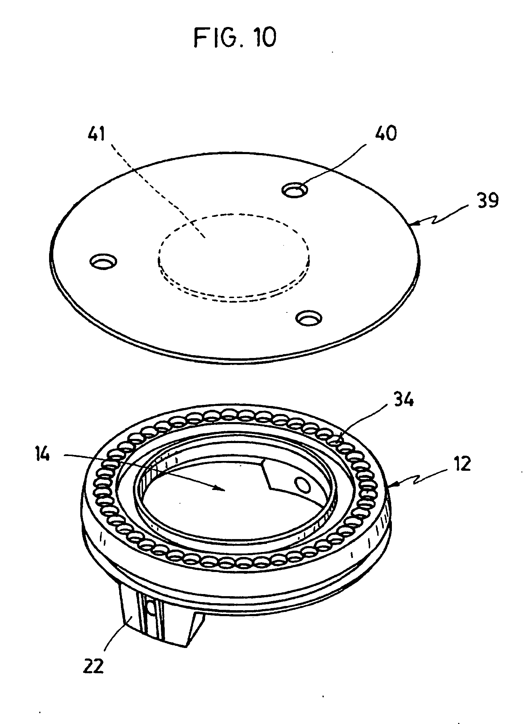

Figure 10 shows a closing lid 39, that is assembled on supporting ring 12 in the time periods when box 36 of tower 13 is not installed on tubular body 2, whereby it not only protects the inside of said body, but also the connection ends of said electrical power conductor cables 9A and/or computing and/or telephony signal cables 9B. To this end, closing lid 39 is resistant to people and mobile office furnishings travelling over it and it must substantially close the inlet mouth of said tubular body 2, which is achieved by making said closing lid 39 from a resistant metal, such as stainless steel, which is attached through holes 40 with screws to supporting ring 12, and forming said closing lid 39 with a closing arrangement, such as a projection 41 that adjusts in central gap 14 of said supporting ring 12.

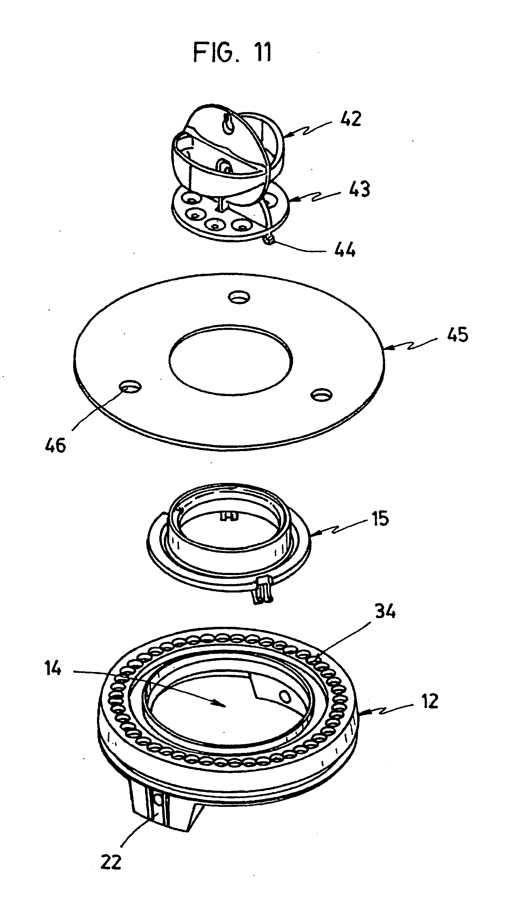

Finally, Figure 11 illustrates the case where the connections contained in tubular body 2 have to be associated with corresponding apparatuses by means of electrical power conductor cables 9A and/or computer and/or telephony signal cables 9B, which protrude through guide ring 15 and run through the inside of a hinged channelling that, according to the Spanish Utility Model Application No. 200201479, is made up of a plurality of hinge elements 42 tied together and two end elements 43 provided with nails 44 that dig into said guide ring 15, which, in turn, is retained in supporting ring 12 by an annular plate 45 provided with holes 46 for screwing to said supporting ring 12.

## Claims

1. Floor box for accessing electrical conductor cables to a multiple connection tower, in particular a box (1) suitable for being embedded in a concrete floor (6) and providing output selectively to electrical power conductor cables (9A) and electrical or optical conductor cables for transmitting signals (9B) that all run through the inside of tubular conduits (8) that are embedded in said concrete floor (6) and which make it possible to insert the free ends of said cables (9A, 9B) into respective predetermined connection bases of a multiple connection tower (13) lying at floor level, **characterized in that** it is made up of a tubular body (2) which, at a bottom end, has a seating base (3) closed by a bottom wall (3A) and a first outer perimeter area (4A) adjacent to said bottom wall (3A) provided with means (5) for anchoring to said concrete floor (6), with there being provided in said bottom wall (3A) and in said first perimeter area (4A) connecting means (7) for connecting to said tubular conduits (8), and a second perimeter area (4B), which runs along the rest of said tubular body (2) and is provided with cutting guiding means (10) for facilitating and guiding the cutting of an excess portion of said tubular body (2) with respect to the thickness of said concrete floor (6), and at its other top end said tubular body (2) has an open base (11) in which there fits a supporting ring (12) for supporting said tower (13) in which in turn there fits, in the central gap (14) thereof, a guide ring (15), while in the inside thereof said tubular body (2) is provided on its bottom wall (3A) with retaining means (17) for retaining a separating plate (18) for separating said electrical power conductor cables (9A) from said electrical or optical signal transmission conductor cables (9B).

2. Floor box according to claim 1, **characterized in that** said connecting means (7) consist of separable areas (19A, 19B) of the actual tubular body (2) that are delimited by weakening lines (20A, 20B).

3. Floor box according to claim 2, **characterized in that** said means (5) for anchoring tubular body (2) to concrete floor (6) consist of short radial tabs (21) that project from said first perimeter area (4A) at points thereof that do not coincide with said separable areas (19A) provided on said first perimeter area (4A).

4. Floor box according to any of the claims 1 through 3, **characterized in that** said cutting guiding means (10) consist of perimeter weakening lines (10A) that are parallel to one another and with respect to said seating base (3), with said perimeter weakening lines (10A) scoring the outer surface of said tubular body (2) with the exception of bottom wall (3A) of said seating base (3) and said first outer perimeter area (4A) adjacent to said bottom wall (3A).

5. Floor box according to any of the claims 1 through 4, **characterized in that** said supporting ring (12) has, on its inner surface that attaches to said tubular body (2), insertion flanges (22) that are diametrically opposite and which are applied to the inner surface of said open base (11) of tubular body (2).

6. Floor box according to any of the claims 1 through 5, **characterized in that** said guide ring (15) that fits inside said supporting ring (12) has: on its outer perimeter and at points on its inner surface that attaches to said supporting ring (12), hooking pins (23); on its inner perimeter at diametrically opposite points, notches (24); and on a middle perimeter between said outer and said inner perimeters, a frustoconical skirting (27) that projects from the outer surface of said guide ring (15).

7. Floor box according to any of the claims 1 through 6, **characterized in that** it comprises a safety cover (16) that consists of a flat disc (26) that is marginally flanked by an insertion skirting (27) that fits into said open base (11) of tubular body (2).

8. Floor box according to claims 5 and 6, **characterized in that** said separating plate (18) is made up of a rectangular plate (28) that has: two lateral sides (28A, 28B), that are rectilinear and opposite and are intended to be applied to inner generating lines of said tubular body (2); one bottom rectilinear side (29), which is intended to be applied to said bottom wall (3A) of seating base (3) of tubular body (2); and one top side (30) that has symmetrical stepping (31) sized according to the projection of said insertion flanges (22) of supporting ring (12) supporting tower (13) and said hooked pins (23) of guide ring (15).

9. Floor box according to claim 8, **characterized in that** said retaining means (17) for retaining separating plate (18), which are arranged on bottom wall (3A) of said tubular body (2), consist of two orthogonal ribs (32) that cross in the centre of said bottom wall (3A) and which are wide enough for bottom side (29) of said rectangular plate (28) constituting said separating plate (18) to fit into.

10. Floor box according to claim 9, **characterized in that** said connecting means (7) arranged on bottom wall (3A) of said tubular body (2) are made up of separable areas (33) located in the circular quadrants formed by said orthogonal ribs (32).

11. Floor box according to claim 9 or 10, **characterized in that** said orthogonal ribs (32) are made up of pairs of walls of reduced height that project from the inner surface of bottom wall (3A) of said tubular body (2).

12. Floor box according to claim 8, **characterized in that** said rectangular plate (28) constituting said separating plate (18), like part of the outer surface of said tubular body (2), is scored with weakening lines (10A) that are parallel to bottom side (29) of said rectangular plate (28) and which run between the two lateral sides (28A, 28B) thereof.

13. Floor box according to claim 3, **characterized in that** said short radial tabs (21) have a straight trapezoidal shape with the smaller base thereof applied to said tubular body (2) and the larger and smaller sides thereof lying perpendicular to said tubular body (2), said smaller side being arranged at a lower position than said larger side.

14. Floor box according to any of the claims 1 through 13, **characterized in that** said supporting ring (12) has on its top surface a plurality of blind holes (34) juxtaposed according to an average circumference.

15. Floor box according to claim 1, **characterized in that** it comprises a closing lid (39) that is applied to said supporting ring (12), said closing lid (39) being resistant to traffic and being provided with holes (40) for screwing to said supporting ring (12) and a central projection (41) that blocks the central gap of said supporting ring (12).

16. Floor box according to claim 1, **characterized in that** said guide ring (15) is retained in said supporting ring (12) by an annular plate (45) screwed to said supporting ring (12).

## Patentansprüche

1. Bodenkassette für den Zugang zu elektrischen Leiterkabeln zu einem Mehrfachanschlussschacht, insbesondere eine Kassette (1), die zum Einbetten in einen Betonfußboden (6) geeignet ist und selektive Auslässe zu elektrischen Stromversorgungskabeln (9A) und elektrischen oder optischen Leitungskabeln (9B) zur Signalübertragung bildet, die alle durch das Innere von Rohrkanälen (8) verlaufen, die in dem Betonfußboden (6) eingebettet sind und die es ermöglichen, die freien Enden der Kabel (9A, 9B) in entsprechende vorbestimmte Verbindungsabschnitte eines Mehrfachanschlussschachtes (13) einzusetzen, der sich auf der Fußbodenebene befindet, **dadurch gekennzeichnet,**
**dass** sie aus einem rohrförmigen Körper (2) besteht, der an einem Bodenende eine durch eine Bodenwand (3A) verschlossene Sitzfläche (3) hat und einen ersten äußeren Umfangsbereich (4A) aufweist, der an die Bodenwand (3A) angrenzt und mit Mitteln (5) zum Verankern in dem Betonfußboden (6) versehen ist,
**dass** in der Bodenwand (3A) und in dem ersten Umfangsbereich (4A) Verbindungsmittel (7) zum Verbinden mit den Rohrkanälen (8) vorgesehen sind,
**dass** ein zweiter Umfangsbereich (4B) vorgesehen ist, der entlang dem Rest des rohrförmigen Körpers (2) verläuft und mit Schneidführungsmitteln (10) zum Erleichtern und Führen des Abschneidens eines überschüssigen Teils des rohrförmigen Körpers (2) gegenüber der Dicke des Betonfußbodens (6) versehen ist,
**dass** der rohrförmige Körper (2) an seinem anderen, oberen Ende eine offene Auflage (11) aufweist, in die ein Stützring (12) zum Stützen des Schachtes (13) passt und in dessen zentrale Öffnung (14) wiederum ein Führungsring (15) passt, und
**dass** der rohrförmige Körper (2) innen auf seiner Bodenwand (3A) mit Haltemitteln (17) versehen ist zum Haltern einer Trennplatte (18) zum Trennen der elektrischen Stromversorgungskabel (9A) von den elektrischen oder optischen Leitungskabeln (9B) zur Signalübertragung.

2. Bodenkassette nach Anspruch 1, **dadurch gekennzeichnet, dass** die Verbindungsmittel (7) aus abtrennbaren Bereichen (19A, 19B) des eigentlichen rohrförmigen Körpers (2) besteht, die durch Schwächungslinien (20A, 20B) abgegrenzt sind.

3. Bodenkassette nach Anspruch 2, **dadurch gekennzeichnet, dass** die Mittel (5) zum Verankern des rohrförmigen Körpers (2) an dem Betonfußboden (6) aus kurzen radialen Ansätzen (21) bestehen, die vom ersten Umfangsbereich (4A) an Punkten vorstehen, die nicht mit den abtrennbaren Bereichen (19A) im ersten Umfangsbereich (4A) zusammenfallen.

4. Bodenkassette nach einem oder mehreren der Ansprüche 1 bis 3, **dadurch gekennzeichnet, dass** die Schneidführungsmittel (10) aus Schwächungslinien (10A) am Umfang bestehen, die parallel zueinander und zu der Sitzfläche (3) verlaufen, und dass die Schwächungslinien (10A) am Umfang die Außenfläche des rohrförmigen Körpers (2) mit Ausnahme der Bodenwand (3A) der Sitzfläche (3) und dem ersten äußeren Umfangsbereich (4A) neben der Bodenwand (3A) einkerben.

5. Bodenkassette nach einem oder mehreren der Ansprüche 1 bis 4, **dadurch gekennzeichnet, dass** der Stützring (12) an seiner Innenfläche, die an dem rohrförmigen Körper (2) befestigt wird, Einsetzlaschen (22) aufweist, die einander diametral gegenüber liegen und die an der Innenfläche der offenen Auflage (11) des rohrförmigen Körpers (2) zur Auflage kommen.

6. Bodenkassette nach einem oder mehreren der Ansprüche 1 bis 5, **dadurch gekennzeichnet, dass** der Führungsring (15), der in den Stützring (12) passt, Folgendes aufweist:
- Hakenstifte (23) an seinem äußeren Umfang und an Punkten auf seiner Innenfläche, an denen er mit dem Stützring (12) verbunden ist,
- Kerben (24) an seinem inneren Umfang an einander diametral gegenüberliegenden Punkten und
- einen kegelstumpfförmigen Kragen (25), der von der Außenfläche des Führungsringes (15) vorsteht, auf einem mittleren Umfang zwischen den äußeren und inneren Umfängen.

7. Bodenkassette nach einem oder mehreren der Ansprüche 1 bis 6, **dadurch gekennzeichnet, dass** sie eine Sicherheitsabdeckung (16) aufweist, die aus einer flachen Scheibe (26) mit einem Einsetzkragen (27) am Rand besteht, die in die offene Auflage (11) des rohrförmigen Körpers (2) passt.

8. Bodenkassette nach den Ansprüchen 5 und 6, **dadurch gekennzeichnet, dass** die Trennplatte (18) aus einer rechteckförmigen Platte (28) besteht, die Folgendes aufweist:
- zwei laterale Seiten (28A, 28B), die geradlinig sind, einander gegenüberliegen und dazu gedacht sind, auf innen gebildeten Linien des rohrförmigen Körpers (2) aufgesetzt zu werden,
- eine untere geradlinige Seite (29), die dazu gedacht ist, auf die Bodenwand (3A) der Sitzfläche (3) des rohrförmigen Körpers (2) aufgesetzt zu werden, und
- eine obere Seite (30), die eine symmetrische Stufung (31) in der Größe aufweist, wie sie dem Vorsprung der Einsetzflansche (22) des Stützringes (12) entspricht, um den Schacht (13) und die Hakenstifte (23) des Führungsringes (15) zu stützen.

9. Bodenkassette nach Anspruch 8, **dadurch gekennzeichnet, dass** die auf der Bodenwand (3A) des rohrförmigen Körpers (2) angeordneten Haltemittel (17) zum Haltern der Trennplatte (18) aus zwei orthogonalen Rippen (32) bestehen, die sich in der Mitte der Bodenwand (3A) kreuzen und die breit genug sind, damit die untere Seite (29) der rechteckigen Platte (28), die die Trennplatte (18) bildet, hineinpasst.

10. Bodenkassette nach Anspruch 9, **dadurch gekennzeichnet, dass** die Verbindungsmittel (7), die auf der Bodenwand (3A) des rohrförmigen Körpers (2) angeordnet sind, aus abtrennbaren Bereichen (33) bestehen, die in den aus den orthogonalen Rippen (32) gebildeten, kreisförmigen Quadranten angeordnet sind.

11. Bodenkassette nach Anspruch 9 oder 10, **dadurch gekennzeichnet, dass** die orthogonalen Rippen (32) aus Wandpaaren reduzierter Höhe bestehen, die von der Innenfläche der Bodenwand (3A) des rohrförmigen Körpers (2) vorstehen.

12. Bodenkassette nach Anspruch 8, **dadurch gekennzeichnet, dass** die rechteckförmige Platte (28), die die Trennplatte (18) bildet, wie ein Teil der Außenfläche des rohrförmigen Körpers (2) mittels Schwächungslinien (10A) eingekerbt ist, die parallel zur unteren Seite (29) der rechteckförmigen Platte (28) und zwischen deren beiden lateralen Seiten (28A, 28B) verlaufen.

13. Bodenkassette nach Anspruch 3, **dadurch gekennzeichnet, dass** die kurzen radialen Ansätze (21) eine gerade trapezförmige Form aufweisen, dass deren kürzere Basis an dem rohrförmigen Körper (2) angeordnet ist und dass deren längere und kleinere Seiten rechtwinklig zu dem rohrförmigen Körper (2) liegen, und dass die kürzere Seite an einer niedrigeren Position als die längere Seite liegt.

14. Bodenkassette nach den Ansprüchen 1 bis 13, **dadurch gekennzeichnet, dass** der Stützring (12) auf seiner oberen Fläche eine Mehrzahl von Blindlöchern (34) aufweist, die entsprechend einem mittleren Umfang nebeneinander angeordnet sind.

15. Bodenkassette nach Anspruch 1, **dadurch gekennzeichnet, dass** sie einen Verschlussdeckel (39) aufweist, der auf dem Stützring (12) angeordnet wird, dass der Verschlussdeckel (39) gegenüber dem Verkehr widerstandsfähig und mit Löchern (40) versehen ist, um ihn mit dem Stützring (12) zu verschrauben, und dass der Verschlussdeckel (39) einen zentralen Vorsprung (41) aufweist, der die zentrale Öffnung des Stützringes (12) blockiert.

16. Bodenkassette nach Anspruch 1, **dadurch gekennzeichnet, dass** der Führungsring (15) in dem Stützring (12) durch eine ringförmige Platte (45) gehaltert ist, die mit dem Stützring (12) verschraubt ist.

## Revendications

1. Boîtier de plancher pour accéder aux câbles conducteurs électriques d'une tour à multiples connexions, en particulier un boîtier (1) approprié pour être intégré dans un plancher en béton (6) et fournissant une sortie de manière sélective pour des câbles conducteurs de puissance électrique (9A) et pour des câbles conducteurs électriques ou optiques pour transmettre des signaux (9B) qui passent tous à travers l'intérieur de conduits tubulaires (8) qui sont intégrés dans ledit plancher en béton (6) et qui permettent d'insérer les extrémités libres desdits câbles (9A, 9B) dans des bases de connexions prédéterminées respectives d'une tour à multiples connexions (13) se trouvant au niveau du plancher, **caractérisé en ce qu'**il est composé d'un corps tubulaire (2) qui, à une extrémité inférieure, comporte une base d'appui (3) fermée par une paroi de fond (3A) et une première zone de périmètre extérieure (4A) adjacente à ladite paroi de fond (3A) pourvue de moyens (5) pour un ancrage audit plancher en béton (6), des moyens de raccordement (7) étant prévus dans ladite paroi de fond (3A) et dans ladite première zone de périmètre (4A) pour un raccordement auxdits conduits tubulaires (8), et une deuxième zone de périmètre (4B), qui s'étend le long du reste dudit corps tubulaire (2) et qui est pourvue de moyens de guidage de coupe (10) pour faciliter et guider la coupe d'une partie en excès dudit corps tubulaire (2) par rapport à l'épaisseur dudit plancher en béton (6), et, à son autre extrémité supérieure, ledit corps tubulaire (2) comporte une base ouverte (11) dans laquelle est montée une bague de support (12) pour supporter ladite tour (13) dans laquelle est montée à son tour, dans l'espace central (14) de celle-ci, une bague de guidage (15), tandis qu'à l'intérieur de celui-ci ledit corps tubulaire (2) est pourvu, sur sa paroi de fond (3A), de moyens de retenue (17) pour retenir une plaque de séparation (18) pour séparer lesdits câbles conducteurs de puissance électrique (9A) desdits câbles conducteurs de transmission de signaux électriques ou optiques (9B).

2. Boîtier de plancher selon la revendication 1, **caractérisé en ce que** lesdits moyens de raccordement (7) consistent en des zones séparables (19A, 19B) du corps tubulaire (2) réel qui sont délimitées par des lignes de rupture (20A, 20B).

3. Boîtier de plancher selon la revendication 2, **caractérisé en ce que** lesdits moyens (5) pour ancrer le corps tubulaire (2) au plancher en béton (6) consistent en de courtes pattes radiales (21) qui s'étendent de ladite première zone de périmètre (4A) en des points de celle-ci qui ne coïncident pas avec lesdites zones séparables (19A) prévues sur ladite première zone de périmètre (4A).

4. Boîtier de plancher selon l'une quelconque des revendications 1 à 3, **caractérisé en ce que** lesdits moyens de guidage de coupe (10) consistent en des lignes de rupture de périmètre (10A) qui sont parallèles les unes aux autres et par rapport à ladite base d'appui (3), lesdites lignes de rupture de périmètre (10A) entaillant la surface extérieure dudit corps tubulaire (2) à l'exception de la paroi de fond (3A) de ladite base d'appui (3) et de ladite première zone de périmètre extérieure (4A) adjacente à ladite paroi de fond (3A).

5. Boîtier de plancher selon l'une quelconque des revendications 1 à 4, **caractérisé en ce que** ladite bague de support (12) comporte, sur sa surface intérieure qui s'attache audit corps tubulaire (2), des brides d'insertion (22) qui sont diamétralement opposées et qui sont appliquées à la surface intérieure de ladite base ouverte (11) du corps tubulaire (2).

6. Boîtier de plancher selon l'une quelconque des revendications 1 à 5, **caractérisé en ce que** ladite bague de guidage (15) qui se monte à l'intérieur de ladite bague de support (12) comporte : sur son périmètre extérieur et en des points sur sa surface intérieure qui s'attache à ladite bague de support (12), des broches d'accrochage (23) ; sur son périmètre intérieur en des points diamétralement opposés, des encoches (24) ; et sur un périmètre central entre lesdits périmètres extérieur et intérieur, une jupe tronconique (27) qui s'étend de la surface extérieure de ladite bague de guidage (15).

7. Boîtier de plancher selon l'une quelconque des revendications 1 à 6, **caractérisé en ce qu'**il comprend un couvercle de sécurité (16) qui consiste en un disque plat (26) qui est entouré marginalement d'une jupe d'insertion (27) qui s'insère dans ladite base ouverte (11) du corps tubulaire (2).

8. Boîtier de plancher selon les revendications 5 et 6, **caractérisé en ce que** ladite plaque de séparation (18) est composée d'une plaque rectangulaire (28) qui comporte : deux côtés latéraux (28A, 28B), qui sont rectilignes et opposés et qui sont destinés à être appliqués à des lignes de génération intérieures dudit corps tubulaire (2) ; un côté rectiligne inférieur (29), qui est destiné à être appliqué à ladite paroi de fond (3A) de la base d'appui (3) du corps tubulaire (2) ; et un côté supérieur (30) qui comporte des gradins symétriques (31) dimensionnés conformément à la projection desdites brides d'insertion (22) de la bague de support (12) supportant la tour (13) et desdites broches d'accrochage (23) de la bague de guidage (15).

9. Boîtier de plancher selon la revendication 8, **caractérisé en ce que** lesdits moyens de retenue (17) pour retenir la plaque de séparation (18), qui sont agencés sur la paroi de fond (3A) dudit corps tubulaire (2), consistent en deux nervures orthogonales (32) qui se croisent au centre de ladite paroi de fond (3A) et qui suffisamment larges pour que le côté inférieur (29) de ladite plaque rectangulaire (28) constituant ladite plaque de séparation (18) s'insère dans celles-ci.

10. Boîtier de plancher selon la revendication 9, **caractérisé en ce que** lesdits moyens de raccordement (7) agencés sur la paroi de fond (3A) dudit corps tubulaire (2) sont composés de zones séparables (33) situées dans les quadrants circulaires formés par lesdites nervures orthogonales (32).

11. Boîtier de plancher selon la revendication 9 ou 10, **caractérisé en ce que** lesdites nervures orthogonales (32) sont composées de paires de parois de hauteur réduite qui s'étendent de la surface intérieure de la paroi de fond (3A) dudit corps tubulaire (2).

12. Boîtier de plancher selon la revendication 8, **caractérisé en ce que** ladite plaque rectangulaire (28) constituant ladite plaque de séparation (18), comme une partie de la surface extérieure dudit corps tubulaire (2), est entaillée par des lignes de rupture (10A) qui sont parallèles au côté inférieur (29) de ladite plaque rectangulaire (28) et qui s'étendent entre les deux côtés latéraux (28A, 28B) de celle-ci.

13. Boîtier de plancher selon la revendication 3, **caractérisé en ce que** lesdites courtes pattes radiales (21) ont une forme de trapèze rectangle, leur plus petite base étant appliquée audit corps tubulaire (2) et leurs plus grand et plus petit côtés étant perpendiculaires audit corps tubulaire (2), ledit plus petit côté étant agencé à une position plus basse que ledit plus grand côté.

14. Boîtier de plancher selon l'une quelconque des revendications 1 à 13, **caractérisé en ce que** ladite bague de support (12) comporte, sur sa surface supérieure, une pluralité de trous borgnes (34) juxtaposés selon une circonférence moyenne.

15. Boîtier de plancher selon la revendication 1, **caractérisé en ce qu'**il comprend un couvercle de fermeture (39) qui est appliqué à ladite bague de support (12), ledit couvercle de fermeture (39) étant résistant au trafic et étant pourvu de trous (40) pour son vissage à ladite bague de support (12) et d'une protubérance centrale (41) qui bloque l'espace central de ladite bague de support (12).

16. Boîtier de plancher selon la revendication 1, **caractérisé en ce que** ladite bague de guidage (15) est retenue dans ladite bague de support (12) par une plaque annulaire (45) vissée à ladite bague de support (12).
